(19) **Europäisches Patentamt / European Patent Office / Office européen des brevets**

(11) **EP 1 535 463 B1**

(12) **FASCICULE DE BREVET EUROPEEN**

(45) Date de publication et mention
de la délivrance du brevet:
**16.02.2011 Bulletin 2011/07**

(51) Int Cl.:
*H04N 5/355* (2011.01)        *H04N 5/235* (2006.01)
*H04N 5/3745* (2011.01)

(21) Numéro de dépôt: **03747952.4**

(22) Date de dépôt: **01.09.2003**

(86) Numéro de dépôt international:
**PCT/EP2003/009740**

(87) Numéro de publication internationale:
**WO 2004/023791 (18.03.2004 Gazette 2004/12)**

(54) **PROCEDE ET CAPTEUR POUR DETERMINER LE CONTRASTE LOCAL D'UNE SCENE OBSERVEE, PAR DETECTION DE LA LUMINANCE EMANANT DE CETTE SCENE**

VERFAHREN UND SENSOR ZUR BESTIMMUNG DES LOKALEN KONTRASTES EINER BEOBACHTETEN SZENE DURCH DETEKTION DER VON DIESER SZENE ABGESTRAHLTEN LUMINANZ

METHOD AND SENSOR FOR DETERMINING THE LOCAL CONTRAST OF AN OBSERVED SCENE BY DETECTION OF THE LUMINANCE FROM SAID SCENE

(84) Etats contractants désignés:
**AT BE BG CH CY CZ DE DK EE ES FI FR GB GR HU IE IT LI LU MC NL PT RO SE SI SK TR**

(30) Priorité: **03.09.2002 FR 0210897**

(43) Date de publication de la demande:
**01.06.2005 Bulletin 2005/22**

(73) Titulaire: **CSEM Centre Suisse d'Electronique et de Microtechnique S.A. - Recherche et Développement
2007 Neuchâtel (CH)**

(72) Inventeurs:
• **HEIM, Pascal
CH-2022 BEVAIX (CH)**

• **RUEDI, Pierre, François
CH-2068 HAUTERIVE (CH)**
• **FRAGNIERE, Eric
CH-2000 NEUCHATEL (CH)**
• **GRENET, Eric
CH-2000 NEUCHATEL (CH)**
• **KAESS, François
CH-1312 ECLEPENS (CH)**

(74) Mandataire: **Colas, Jean-Pierre et al
Cabinet Lavoix
2, Place d'Estienne d'Orves
75441 Paris Cedex 09 (FR)**

(56) Documents cités:
**WO-A-01/99292        WO-A-98/14002
US-A- 5 837 993        US-A- 6 069 377**

**Description**

La présente invention est relative à un procédé et à un capteur destinés à déterminer le contraste local d'une scène observée par détection de la luminance émanant de cette scène à l'aide d'un réseau de photocapteurs réalisé en technologie CMOS.

Dans la technique de l'imagerie optique, il est connu d'acquérir l'image d'une scène observée à l'aide d'un réseau de photocapteurs dont chacun est associé à un circuit d'analyse formant avec lui, ce qu'il est convenu d'appeler un pixel. Le réseau de pixels est de préférence réalisé sous la forme d'un circuit intégré selon la technologie CMOS.

Les photocapteurs de chaque pixel délivrent un courant proportionnel à la quantité de lumière qu'ils reçoivent de la scène observée. En pratique, la luminosité moyenne d'une image réelle peut varier de six ordres de grandeur en fonction de la situation. Par conséquent, les courants délivrés par les photocapteurs peuvent varier dans les mêmes proportions. Il est donc nécessaire de recourir à des circuits d'adaptation pour adapter les courants aux niveaux requis par les circuits de traitement de chaque pixel, au détriment de la dynamique d'entrée du système qui excède rarement deux à trois ordres de grandeur en pratique.

On connaît plusieurs techniques pour augmenter la dynamique d'entrée. L'une d'entre elles, décrite dans un article de S.Kavidias et al. dans IEEE, Journal of Solid State Circuits, vol. 35, août 2000 et intitulé "A Logarithmic Response CMOS Image Sensor with On-Chip Calibration", consiste à effectuer une compression logarithmique du courant délivré par le photocapteur, ce qu'on réalise à l'aide de transistors MOS travaillant en faible inversion. La difficulté de cette technique réside dans le fait qu'il faut apparier les transistors qui, au sein de la matrice de pixels, mettent en oeuvre la compression logarithmique. Ceci est une contrainte de réalisation considérable, si on veut obtenir une précision tant soit peu satisfaisante.

Une autre technique décrite par exemple dans FR 2 605 475, dans WO 98/14002 et dans un article de Y. Ni et al. dans IEEE, Journal of Solid State Circuits, vol. 32, Juillet 1997 et intitulé "Histogramme-Equalization-Based Adaptive Image Sensor for Real-Time Vision", consiste à intégrer le courant délivré par le photocapteur sur une capacité jusqu'à ce que soit atteinte une tension de référence définie aux bornes de la capacité. Chaque pixel du réseau de pixels signale le moment auquel la tension aux bornes de sa capacité d'intégration atteint la valeur de référence. Dans ce cas, la dynamique d'entrée est limitée par le temps d'intégration maximal accordé au système et par son bruit intrinsèque. On peut associer à cette technique des méthodes de classification des échantillons par histogramme. Cette technique est également complexe et laisse à désirer sur le plan de la précision.

Pour s'affranchir de ces difficultés dues à la variation considérable de la luminosité, il est également connu de déterminer le contraste local de l'image prise par le réseau de pixels. Cette méthode est intéressante car, pour un motif donné de la scène observée, le contraste présente la même valeur, que ce motif soit dans l'ombre ou en pleine lumière. Or, comme le contraste local fournit une représentation fidèle de l'activité de chaque pixel, sa détermination permet de s'affranchir des difficultés inhérentes aux techniques connues des documents antérieurs précités.

Le contraste local peut être défini, pour un système unidimensionnel discret, par exemple une ligne de pixels, par l'expression suivante:

$$C = 2 \bullet \frac{L_G - L_D}{L_G + L_D} \qquad (1)$$

dans laquelle C est le contraste local associé à un pixel et $L_G$ et $L_D$ sont les signaux représentant les luminances captées par les pixels situés respectivement à gauche et à droite du pixel considéré. En d'autres termes, le contraste local correspond au gradient des luminances locales normalisé par leur moyenne. Ce contraste est donc une grandeur indépendante de la luminance locale.

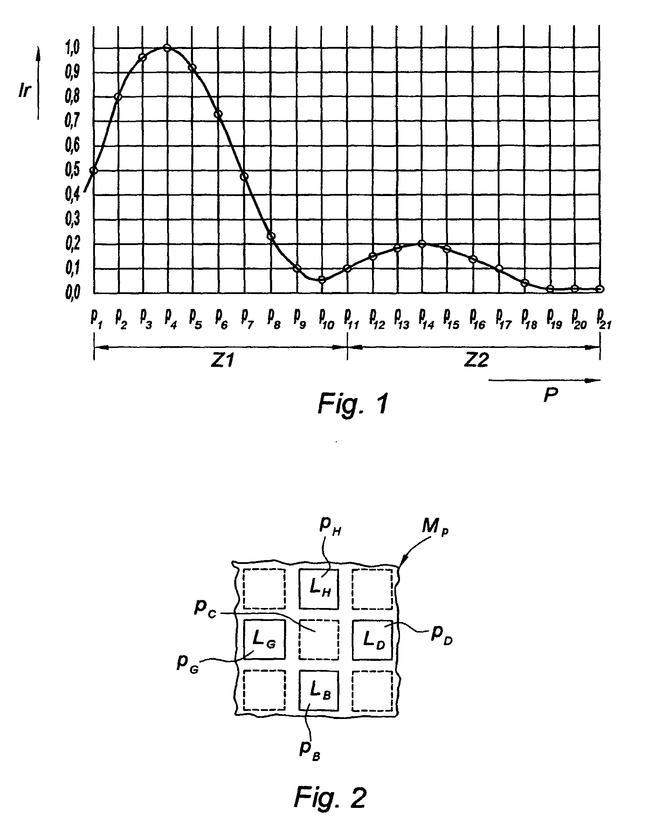

On peut appliquer l'expression (1) à l'exemple d'une image prise d'une scène présentant une zone de forte illumination Z1 et une zone de faible illumination Z2, les réflectances des objets présents dans la scène étant supposées identiques pour le besoin de l'explication et le rapport d'illumination des deux zones étant supposé être de 5 à 1. Cette situation est illustrée par le diagramme de la figure 1 des dessins annexés, où on a porté la luminance relative Ir en fonction de l'emplacement de pixels p1 à p21 dans une rangée de pixels formant une partie d'un réseau unidimensionnel de pixels utilisé pour l'expérimentation.

Or, malgré cette différence considérable d'illumination, on constate que les valeurs de contraste calculées sur la base de l'expression (1) sont les mêmes pour les points correspondants des deux zones (pixels p1 et p11, pixels p2 et p12, pixels p3 et p13, etc.).

La définition du contraste peut être étendue à une matrice bidimensionnelle de pixels $M_p$ en distinguant deux composantes de contraste $C_x$ et $C_y$ suivant les axes x et y de cette matrice. Dans ce cas (voir la figure 2 des dessins annexés qui représente une partie d'une telle matrice $M_p$), on fait intervenir les luminances, respectivement $L_G$, $L_D$, $L_H$

et $L_B$ de certains pixels $p_G$ (gauche), $p_D$ (droite), $p_H$ (haut) et $p_B$ (bas) adjacents à un pixel central $p_C$ situé dans la matrice $M_p$ à un emplacement quelconque (les qualificatifs gauche, droite haut et bas n'ont ici qu'une signification explicative, les positions des pixels dans l'espace pouvant dans l'ensemble être arbitraires).

Les deux composantes peuvent alors s'écrire:

$$C_x = 4 \bullet \frac{L_G - L_D}{L_G + L_D + L_H + L_B}$$

$$(2)$$

$$C_y = 4 \bullet \frac{L_H - L_B}{L_G + L_D + L_H + L_B}$$

Dans ces expressions aussi, le contraste local correspond au gradient des luminances locales normalisé par leur moyenne.

Pour calculer le contraste pour un pixel donné dans le cas de la matrice bidimensionnelle $M_p$, il faut ainsi calculer la somme de quatre signaux représentatifs de la luminance et faire une division de la différence de deux signaux représentatifs de la luminance par le résultat de cette somme. Pour effectuer ces opérations arithmétiques, directement de façon analogique et avec la précision souhaitée, il faut des circuits complexes. Or, dans une matrice de pixels du genre concerné, la plupart des fonctionnalités doivent être mises en oeuvre au sein de chaque pixel individuel, ce dernier comprenant aussi bien le photocapteur et le circuit d'intégration du photocourant que les circuits de calcul de contraste associés. Les circuits analogiques nécessaires pour réaliser le calcul des expressions (2) ci-dessus ne sont pas compatibles avec les exigences actuelles de miniaturisation des matrices de pixels du genre concerné du fait, surtout, de leur encombrement trop grand.

On comprendra aisément que les formules données ci-dessus pour le calcul du contraste ne sont qu'indicatives et sont donc susceptibles de varier sans sortir du cadre de l'invention. Le nombre et la position des pixels voisins pris en compte dans le calcul sont également sujets à variations. Le contraste, dans son acception la plus large, est défini comme étant la différence relative entre les luminances des points voisins. De plus, et bien que l'on continuera à parler de contraste dans la suite de la description, il sera entendu que l'invention vise tout circuit de calcul, qui utilise des signaux fournis par les pixels voisins et dont le résultat est normalisé par rapport à la valeur locale de la luminance.

Le brevet US 5 837 993 décrit une matrice de pixels dans laquelle chaque pixel comprend des moyens pour calculer le contraste local en prenant en compte la moyenne des valeurs représentant les luminances d'un pixel considéré et des pixels qui lui sont adjacents dans la matrice

L'invention a t pour but de fournir un procédé et un capteur du genre décrit ci-dessus au moyen desquels le calcul de contraste peut être simplifié.

L'invention a donc pour objet un procédé et un capteur de détermination du contraste local tels que définis respectivement dans les revendications 1 et 4

Grâce à ces caractéristiques, les moyens de calcul nécessaires pour obtenir la valeur et l'orientation du contraste local peuvent être simples, un avantage supplémentaire de l'invention consistant en ce que les valeurs obtenues deviennent indépendantes du niveau d'éclairement de la scène observée.

Des caractéristiques avantageuses complémentaires de l'invention sont définies dans les sous-revendications.

D'autres caractéristiques et avantages de la présente invention apparaîtront au cours de la description qui va suivre, donnée uniquement à titre d'exemple et faite en se référant aux dessins annexés sur lesquels:

la figure 1, déjà décrite, est un diagramme de l'évolution de la luminance relevée par un réseau linéaire de pixels en fonction de leurs emplacements dans ce réseau, le diagramme illustrant une propriété intéressante du contraste local dans un tel réseau linéaire de pixels;

la figure 2, également déjà décrite, montre une partie d'un réseau réalisé sous la forme d'une matrice bidimensionnelle de pixels en vue d'illustrer la méthode de calcul du contraste local connu de l'art antérieur;

la figure 3 montre une vue analogue à celle de la figure 2 en vue d'expliquer les concepts qui sont à la base de la présente invention;

la figure 4 est une vue plus détaillée de la partie de la matrice bidimensionnelle représentée sur la figure 3;

la figure 5 est un schéma simplifié d'un pixel faisant partie de la matrice bidimensionnelle de la figure 4; et

les figures 6 et 7 sont des diagrammes illustrant le fonctionnement de la matrice représentée sur la figure 4;

la figure 8 est un schéma d'un circuit de calcul du vecteur de contraste utilisé dans le pixel représenté sur la figure 5.

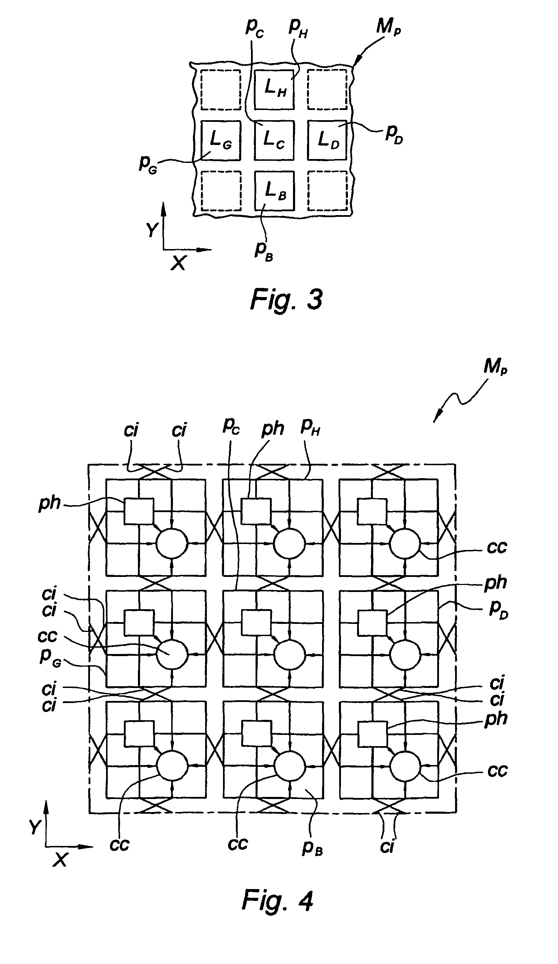

Les figures 3 et 4 illustrent le concept de base de la mise en oeuvre de l'invention appliquée à une matrice de pixel M$_p$ formant un réseau à deux dimensions, étant entendu que ce concept peut être utilisé pour des réseaux unidimensionnels formés par des rangées de pixels.

Ceci étant, sur la figure 3, la partie de la matrice M$_p$ de pixels déjà décrite à propos de la figure 2, est représentée à nouveau, cependant que le pixel central p$_c$ est ici également mis en évidence avec la luminance L$_c$ qu'il peut capter. Selon l'invention, le contraste local au niveau du pixel central p$_c$ est calculé selon les expressions

$$C_x = L_G - L_D \qquad\qquad (3)$$

C$_y$ = L$_H$ - L$_B$ Dans ces expressions:

- C$_x$ composante de contraste local dans la direction x de la matrice,
- C$_y$ composante de contraste local dans la direction y de la matrice,
- L$_G$, L$_D$ signaux représentatifs des luminances relevées respectivement par les pixels adjacents au pixel central p$_c$ dans la direction x,
- L$_H$, L$_B$ signaux représentatifs des luminances relevées respectivement par les pixels adjacents au pixel central p$_c$ dans la direction y.

Pour mettre en oeuvre le calcul selon ces expressions, le procédé de l'invention consiste, pendant chaque cycle de prise d'image, à communiquer à chaque pixel de la matrice les signaux représentatifs des luminances relevées par les quatre pixels adjacents selon les deux axes x et y. Ceci est illustré sur la figure 4 qui est une représentation agrandie et plus détaillée de la partie de matrice représentée sur la figure 3.

Il est à noter que l'invention englobe également l'application du procédé à un capteur à une seule dimension. Dans ce cas, le calcul selon l'expression C$_x$ = L$_G$ - L$_D$ pourra suffire.

Ceci étant, dans un capteur à deux dimensions, chaque pixel comprend un circuit photocapteur ph engendrant un signal représentant la luminance et un circuit cc de calcul de contraste local. Ce dernier est connecté aux circuits photocapteurs ph des quatre pixels adjacents selon les axes respectifs x et y de la matrice, par des connexions interpixels ci. Ainsi chaque circuit de calcul cc peut recevoir les quatre signaux représentatifs de la luminance provenant de ses voisins p$_G$, p$_D$, Pu et p$_B$ et il est agencé pour effectuer les opérations arithmétiques spécifiées dans les expressions (3) ci-dessus.

Comme il sera décrit en détail ci-après, les signaux représentatifs de la luminance sont des valeurs intégrées des valeurs de luminance captées par les pixels respectifs. Les valeurs intégrées des signaux représentant les luminances relevées par lesdits pixels adjacents, précédent et suivant, sont échantillonnées à un instant dans le cycle auquel la valeur intégrée de la luminance relevée par le pixel considéré devient égale à une valeur de référence prédéterminée. Le calcul du contraste local du pixel considéré s'effectue alors sur la base des valeurs ainsi échantillonnées.

Cette caractéristique présente l'avantage important que, pour le calcul du contraste, on peut se dispenser du signal représentant la luminance relevée par le pixel central, sans altérer la précision de la détermination du contraste. De ce fait le calcul du contraste revient à faire de simples opérations de soustraction. Le circuit de calcul peut être alors très simple. L'homme de métier saura concevoir un circuit de calcul permettant de les exécuter sans autre information supplémentaire. Les détails des circuits de calcul ne sont donc pas décrits ici.

On comprend, par ailleurs, que les figures 3 et 4 ne représentent qu'une très faible quantité de pixels de la matrice M$_p$, qui peut en comporter un grand nombre comme cela est bien connu, une matrice de 64 x 64 pixels étant par exemple envisageable. Par ailleurs, de façon également connue des spécialistes, chaque pixel est pourvu de ses moyens d'adressage et de transmission de signal utile, basé par exemple sur le procédé d'encodage temporel décrit dans EP 1 150 250 au nom du titulaire de la présente demande de brevet.

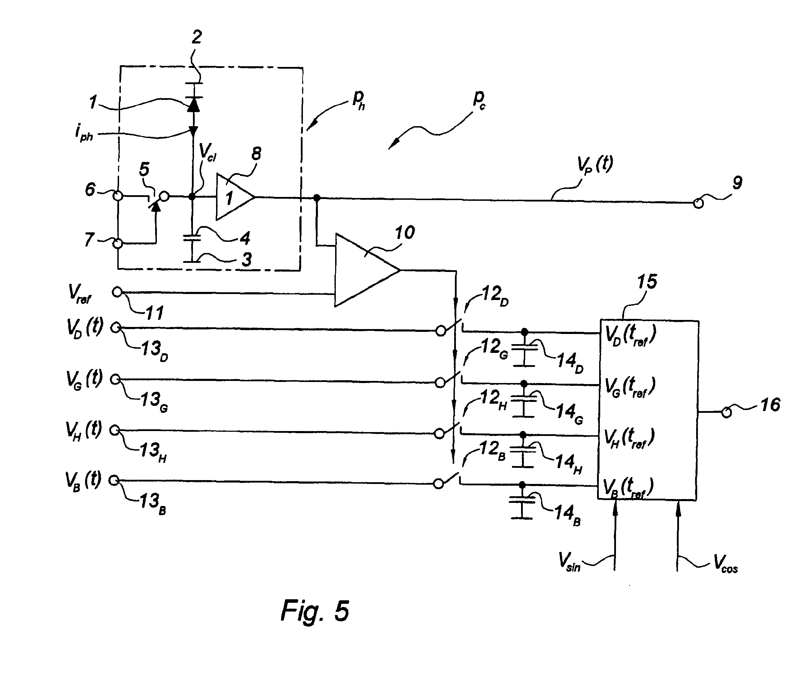

La figure 5 représente un circuit plus détaillé de chaque pixel p de la matrice M$_p$. Le circuit photocapteur ph de ce pixel p comprend une photodiode 1, ou un élément photosensible équivalent approprié, qui est montée en série entre les bornes d'alimentation 2 et 3, avec une capacité d'intégration 4. Le noeud entre la capacité 4 et la photodiode 1 est connecté à un interrupteur semi-conducteur 5 qui permet d'y appliquer le signal provenant d'une borne de niveau de noir 6 sous la commande d'un signal sur une borne de commande 7. D'autre part, le noeud en question est connecté à un amplificateur suiveur 8 de gain unité par exemple dont la sortie est reliée à une borne 9

La formation du signal de luminance V$_p$(t) se déroule de la façon suivante.

Avant l'exposition, l'interrupteur 5 connecte la capacité 4 à une tension de niveau de noir qui est appliquée sur la borne 6 de sorte que cette capacité 4 est chargée jusqu'au niveau de cette tension qui représente le niveau de noir. L'exposition commence par l'ouverture de l'interrupteur 5. Le photocourant i$_{ph}$, proportionnel à l'intensité lumineuse frappant la diode 1 est intégré sur la capacité 4. Le signal de luminance V$_p$(t) peut alors être prélevé sur la borne 9.

La borne 9 est également connectée à une première entrée d'un comparateur 10 dont l'autre entrée reçoit une tension de référence $V_{ref}$, appliquée sur une borne 11 du pixel. La sortie de ce comparateur 10 commande, lorsque la tension $V_p(t)$ atteint la valeur $V_{ref}$, quatre interrupteurs semi-conducteurs $12_D$, $12_G$, $12_H$ et $12_B$ auxquels sont respectivement appliquées des tensions de luminance $V_D(t)$, $V_G(t)$, $V_H(t)$ et $V_B(t)$ provenant des pixels adjacents par l'intermédiaire des connexions ci (figure 4) et appliquées à des bornes correspondantes $13_D$, $13_G$, $13_H$ et $13_B$. Ces tensions sont échantillonnées sur des capacités d'échantillonnage $14_D$, $14_G$, $14_H$ et $14_B$, respectivement, pour pouvoir être utilisées au moment approprié par un circuit 15 de calcul des valeurs de contraste dans lequel est calculée la valeur de contraste recherchée de préférence sous la forme du vecteur de contraste local du pixel p considéré. Les données correspondantes apparaissent sur une borne 16 de ce dernier.

Il est à noter que le signal de luminance $V_p(t)$ peut être obtenu avec d'autres moyens que ceux décrits ci-dessus à propos du circuit photodétecteur Ph de la figure 5, pour autant que la grandeur de sortie du circuit soit proportionnelle à la fois à la luminance observée et au temps d'intégration. De même, l'élément photosensible 1 peut être constitué par tout autre composant connu tel qu'un phototransistor, par exemple.

Pour l'explication du fonctionnement des autres composantes représentées sur la figure 5, on va supposer que la luminance globale de l'image observée est constante pendant la durée d'intégration prévue. Dans ces conditions, la tension aux bornes de la capacité d'intégration 4 de chaque pixel augmente linéairement en fonction du temps, avec une pente proportionnelle au courant de sa diode 1 associée, donc à la luminance locale correspondant au pixel considéré. Ainsi, on peut écrire:

$$V_{ci}(t) = K \bullet L_p \bullet t \qquad\qquad (4)$$

où $V_{ci}$ est la tension aux bornes de la capacité 4, $L_p$ la luminance locale et K une constante de proportionnalité dépendant de certains paramètres comme, par exemple, le rendement quantique de la technologie utilisée et la valeur de la capacité d'intégration 4. La tension $V_{ci}$ aux bornes de la capacité 4 équivaut à celle $V_p(t)$ apparaissant à la sortie de l'amplificateur suiveur 8 de gain unité.

Pendant l'intégration, cette dernière tension $V_p(t)$ est comparée en permanence à la tension de référence $V_{ref}$ appliquée à la borne 11 du pixel p. A l'instant $t_{ref}$ où elle devient égale à cette tension de référence $V_{ref}$, la sortie du comparateur 10 bascule et ouvre les interrupteurs semi-conducteurs $12_D$, $12_G$, $12_H$ et $12_B$. Les tensions représentant respectivement les luminances instantanées des pixels voisins, intégrées sur les capacités 4 respectives de ces derniers, sont alors échantillonnées sur les capacités correspondantes $14_D$, $14_G$, $14_H$ et $14_B$, ces tensions étant désignées respectivement par $V_D(t_{ref})$, $V_G(t_{ref})$, $V_h(t_{ref})$ et $V_b(t_{ref})$ et appliquées sur le circuit de calcul de contraste 15. On notera que cet échantillonnage est indépendant du processus d'intégration se déroulant dans les cellules à l'aide des capacités 4, ce processus se poursuivant dans chacune des cellules tant que la tension de saturation inhérente aux circuits n'est pas atteinte, étant entendu que les circuits doivent être dimensionnés pour que cette tension de saturation soit plus élevée que le niveau de blanc.

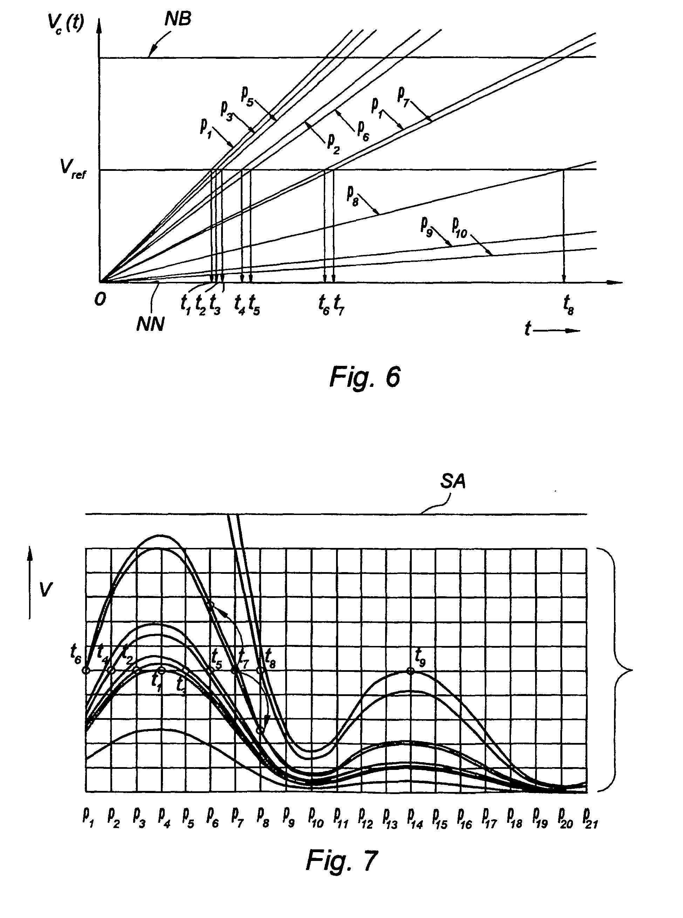

Le fonctionnement qui vient d'être décrit est illustré sur les figures 6 et 7. La figure 6 représente l'allure des tensions intégrées (désignées ici collectivement, sur l'axe des ordonnées par $V_c(t)$) d'un certain nombre de pixels p1 à p10 agencés sur une rangée de la matrice du réseau, dans l'hypothèse d'un éclairement sur celui-ci analogue à celui représenté sur la figure 1. Si l'image prise est statique pendant l'intégration (ce que l'on suppose être le cas ici), les tensions intégrées $V_c(t)$ des pixels évoluent linéairement avec le temps. Cependant, en pratique, on ne fait évoluer les tensions d'intégration qu'entre deux niveaux, celui du noir NN et celui du blanc NB, qui définissent une plage d'intégration permettant d'assurer un fonctionnement correct avant que la saturation inhérente aux circuits ne soit atteinte (voir figure 7 la droite SA qui représente le niveau de saturation), la tension de référence $V_{ref}$ pouvant être choisie à environ la moitié de l'écart entre les deux niveaux NN et NB.

La figure 7 représente le profil spatial des tensions d'intégration des pixels $p_1$ à $p_9$ à différents instants au cours de l'intégration sur les capacités 4 de ces pixels. Les courbes représentées sont prises respectivement aux instants $t_1$, $t_2$, $t_3$ etc. (figure 6) qui correspondent au profil des tensions aux moments où elles atteignent respectivement la tension de référence $V_{ref}$. A noter que sur les figures 6 et 7, on n'a pas représenté tous les pixels pour que les diagrammes conservent leur lisibilité. A titre d'exemple, on a illustré la mesure de contraste à l'instant $t_7$, la valeur de contraste résultant dans ce cas de la différence des amplitudes mesurées dans les pixels $p_6$ et $p_8$.

Il en résulte que pour tout pixel de la matrice, les tensions d'intégration nécessaires au calcul du contraste local sont échantillonnées, lorsque la tension de ce pixel issue de l'amplificateur 8 est égale à une valeur qui est identique pour toute la matrice. Par conséquent, la normalisation de ces tensions d'intégration revient à une division par une constante. A cette constante près (ce qui correspond à un gain du point de vue électronique), les tensions échantillonnées des pixels voisins du pixel considéré sont implicitement normalisées par la tension de ce dernier.

Dans ces conditions, les différences de tension:

$$V_{p_{cx}}(t_{ref}) = V_D(t_{ref}) - V_G(t_{ref})$$

$$\text{(5)}$$

$$V_{p_{cy}}(t_{ref}) = V_H(t_{ref}) - V_B(t_{ref})$$

représentent respectivement, et à la même constante multiplicative près, les composantes en x et en y du vecteur de contraste du pixel considéré:

$$V_{p_{cx}}(t_{ref}) = k \bullet p_{cx}$$

$$\text{(6)}$$

$$V_{p_{cy}}(t_{ref}) = k \bullet p_{cy}$$

Ces tensions constituent le résultat recherché et peuvent être traitées comme connu en soi par l'homme de métier. Par exemple, il est possible d'en effectuer une conversion analogique/numérique et de les traiter ensuite dans un processeur de signaux numériques de type DSP. Il peut également être souhaitable d'effectuer un prétraitement du vecteur de contraste au niveau du capteur lui-même pour restreindre les données obtenues aux informations les plus pertinentes. Par exemple, on peut appliquer le procédé d'encodage temporel décrit dans EP 1 150 250.

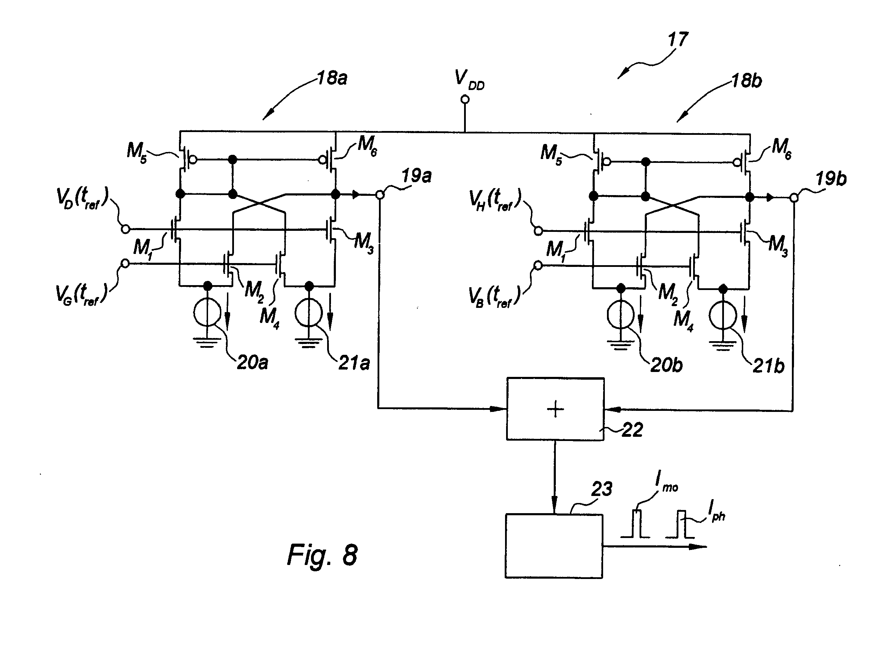

Pour calculer les valeurs de contraste, on utilise des moyens multiplicateurs dits à quatre quadrants, dont le schéma est représenté sur la figure 8 et désigné par la référence générale 17, qui font partie du circuit de calcul 16 représenté sur la figure 5.

Les moyens multiplicateurs 17 comprennent deux multiplieurs analogiques 18a et 18b de structure identique et affectés respectivement aux calculs pour les directions x et y par rapport à un pixel $p_c$ quelconque du réseau de pixels. Chacun des ces multiplieurs met en oeuvre une fonction de la forme:

$$I_{out} = \beta \cdot (V_1 - V_2) \cdot (V_4 - V_3) \qquad \text{(7)}$$

dans laquelle

- $I_{out}$ est le courant de sortie du multiplieur 18a ou 18b apparaissant sur une sortie 19a, 19b respective de ceux-ci,
- $V_1$ et $V_2$ sont les tensions échantillonnées comme décrit à propos de la figure 5, à savoir pour la direction x par rapport à un pixel $p_c$, les tensions $V_D(t_{ref})$ et $V_G(t_{ref})$, respectivement, et pour la direction y par rapport à ce même pixel les tensions $V_H(t_{ref})$ et $V_B(t_{ref})$, respectivement, et
- $V_3$ et $V_4$ sont des tensions sinusoïdales respectives $V_A \cdot \cos\varphi(t)$ et $V_A \cdot \sin\varphi(t)$ engendrées par des générateurs de tension sinusoïdale 20a, 21a et 20b, 21b, respectivement, comme représenté sur la figure 8. Bien entendu, ces tensions sinusoïdales peuvent facilement être engendrées par un générateur unique (non représenté) dont le schéma est à la portée de l'homme de métier.

En appliquant l'équation (7) pour le multiplieur 18a et en reprenant l'expression (5) correspondante, le courant résultant $I_x$ pour l'axe x devient:

$$I_x = \beta V_A \cdot V_{p_{cx}}(t_{ref}) \cdot \cos\varphi(t) \qquad \text{(8)}$$

et de même pour le multiplieur 18b, le courant $I_y$ pour l'axe y devient:

$$I_y = \beta V_A \cdot V_{p_{cy}}(t_{ref}) \cdot \sin\varphi(t) \qquad \text{(9)}$$

Les sorties 19a et 19b des multiplieurs 18a et 18b sont connectées aux entrées d'un additionneur 22 qui

calculent la différence $I_{tot}$ entre les deux courants $I_x$ et $I_y$:

$$I_{tot} = \beta V_A \cdot V_{P_{cx}}(t_{ref}) \cdot \cos\varphi(t) + \beta V_A \cdot V_{P_{cy}}(t_{ref}) \cdot \sin\varphi(t) \qquad (10)$$

Ce résultat peut être reformulé de la façon suivante:

$$I_{tot} = C_{P_c} \cdot \cos\left(\alpha_{P_c} - \varphi(t)\right) \qquad (11)$$

où $C_{Pc}$ et $\alpha_{Pc}$ représentent respectivement le module et la phase du vecteur de contraste local du pixel $p_c$, étant donné que $V_{P\alpha}(t_{ref})$ et $V_{Pcy}(t_{ref})$ représentent respectivement et à une constante de proportionnalité près, les composantes suivant les axes x et y du même vecteur.

Le résultat obtenu dans l'additionneur 22 est ensuite envoyé de préférence dans un circuit de codage temporel 23 décrit dans EP 1 150 250. Ce circuit fournit des impulsions $I_{mo}$ et $I_{ph}$ représentant respectivement en codage temporel le module et la phase du vecteur de contraste.

Les multiplieurs 18a et 18b sont réalisés de préférence conformément au schéma de la figure 8, chacun comportant six transistors M1 à M6 raccordés comme représenté. Ce montage présente l'avantage de pouvoir constituer par les capacités parasites des transistors M1, M2 et M3, M4, respectivement les capacités d'échantillonnage $14_D$, $14_G$, $14_H$ et $14_B$ dé la figure 5, celles-ci étant, dans ces conditions, incorporées directement dans le circuit de calcul 15.

Le mode de mise en oeuvre de l'invention qui vient d'être décrit à propos des figures 5 à 8 permet de déterminer par le calcul la norme et l'orientation du vecteur de contraste avec une très bonne précision, ce qui peut s'avérer important dans certaines applications.

**Revendications**

1.   Procédé permettant de déterminer le contraste local au niveau de chaque pixel ($p_c$) d'un réseau ($M_p$) de pixels photosensibles agencés selon au moins une dimension (x, y), ce procédé consistant, au cours de cycles de prises d'image successifs respectifs, à engendrer un signal ($L_c$) représentatif de la luminance locale relevée par chaque pixel, les signaux représentatifs de la luminance ($L_{pn}$, $L_{p(n+1)}$, $L_{p(n-1)}$) étant des valeurs intégrées des valeurs de luminance captées par les pixels respectifs ($p_c$, $p_G$, $p_D$, $p_H$, $p_B$), à échantillonner les valeurs intégrées des signaux représentant les luminances relevées par les pixels qui sont adjacents ($p_G$, $p_D$, $p_H$, $p_B$) à un pixel considéré ($p_c$), **caractérisé en ce que** l'échantillonnage a lieu à un instant dans ledit cycle auquel la valeur intégrée de la luminance relevée par ledit pixel considéré ($p_c$) devient égale à une valeur de référence prédéterminée ($V_{ref}$, $V_{BLANC}$) qui est identique pour tous les pixels de la matrice, et à déterminer le contraste local dudit pixel considéré ($p_c$) sur la base des valeurs ainsi échantillonnées,

- ladite valeur de référence ($V_{ref}$) étant choisie à une valeur intermédiaire de l'écart séparant une valeur de niveau de blanc (NB) et une valeur de niveau de noir (NN) susceptibles d'être relevées au maximum par lesdits pixels ($p_c$, $p_G$, $p_D$, $p_H$, $p_B$), cette valeur étant de préférence égale à la moitié de cet écart, et

**en ce que** le calcul de contraste est effectué sur la base de l'expression

$$C_x = L_G - L_D$$

et, dans le cas d'un réseau bidimensionnel de l'expression

$$C_y = L_H - L_B$$

dans lesquelles:

- $C_x$ composante de contraste local dans la direction x de la matrice,

- $C_y$ composante de contraste local dans la direction y de la matrice,
- $L_G$, $L_D$ signaux représentatifs des luminances relevées respectivement par les pixels ($p_G$, $p_D$), adjacents au pixel considéré ($p_c$) dans la direction x,
- $L_H$, $L_B$ signaux représentatifs des luminances relevées respectivement par les pixels ($p_H$, $p_B$) adjacents au pixel considéré ($p_c$) dans la direction y,

la ou lesdites expressions étant utilisées pour calculer les composantes du vecteur de contraste au niveau dudit pixel considéré ($p_c$).

2. Procédé selon la revendication 1, **caractérisé en ce que** les valeurs intégrées des signaux représentant les luminances relevées par lesdits pixels adjacents ($p_G$, $p_D$, $p_H$, $p_B$) sont accumulées sur des capacités (($14_D$, $14_G$, $14_H$, $14_B$) respectives à l'instant où la valeur intégrée du pixel considéré ($p_c$) atteint ladite valeur de référence ($V_{ref}$), lesdites capacités fournissant les valeurs nécessaires au calcul du contraste.

3. Procédé selon la revendication 2, **caractérisé en ce que** chaque couple de valeurs accumulées ($V_G(t_{ref})$, $V_D(t_{ref})$ et $V_H(t_{ref})$, $V_B(t_{ref})$) appartenant respectivement auxdites directions x et y est soumis à une multiplication analogique à quatre quadrants par un signal cosinusoïdal et, respectivement, un signal sinusoïdal de même fréquence et amplitude que ledit signal cosinusoïdal, et **en ce que** les résultats ($I_x$, $I_y$) des multiplications correspondantes sont additionnées pour former le module et la phase du vecteur de contraste local correspondant audit pixel considéré ($p_c$).

4. Capteur destiné à déterminer le contraste local d'une scène observée par détection de la luminance émanant de cette scène pour la mise en oeuvre du procédé suivant l'une des revendications précédentes, ce capteur comprenant

- un réseau comportant au moins une rangée de pixels agencée selon au moins une dimension dudit réseau,
- dans chaque pixel ($p_c$) un circuit photosensible (ph) fournissant un signal représentant la luminance locale ($V_{ci}$) émanant de l'image et relevée par ledit pixel sous forme d'une valeur d'intégration ($Vp(t)$), ce capteur étant **caractérisé en ce qu'**il comprend :
- des moyens d'échantillonnage agencés pour effectuer l'échantillonnage desdites valeurs à un instant dans un cycle auquel la valeur intégrée de la luminance relevée par ledit pixel considéré ($p_c$) devient égale à une valeur de référence prédéterminée ($V_{ref}$) qui est identique pour tous les pixels de la matrice, et pour déterminer le contraste local dudit pixel considéré ($p_c$) sur la base des valeurs ainsi échantillonnées,

et **en ce qu'**il comprend également:

- une source produisant ladite valeur de référence de manière que cette valeur présente une valeur intermédiaire de l'écart séparant une valeur de niveau de blanc (NB) et une valeur de niveau de noir (NN) susceptibles d'être relevées au maximum par lesdits pixels ($p_c$, $p_G$, $p_D$, $p_H$, $p_B$), cette valeur étant de préférence égale à la moitié de cet écart, ladite source étant connectée à tous les pixels de ladite matrice pour qu'elle leur applique la même valeur de référence,

et des moyens de calcul de contraste agencés pour effectuer ce calcul sur la base de l'expression

$$C_x = L_G - L_D$$

et, dans le cas d'un réseau bidimensionnel de l'expression

$$C_y = L_H - L_B$$

dans lesquelles:

- $C_x$ composante de contraste local dans la direction x de la matrice,
- $C_y$ composante de contraste local dans la direction y de la matrice,
- $L_G$, $L_D$ signaux représentatifs des luminances relevées respectivement par les pixels ($p_G$, $p_D$), adjacents au pixel considéré ($p_c$) dans la direction x,
- $L_H$, $L_B$ signaux représentatifs des luminances relevées respectivement par les pixels ($p_H$, $p_B$) adjacents au pixel considéré ($p_c$) dans la direction y,
la ou lesdites expressions étant utilisées pour calculer les composantes du vecteur de contraste au niveau dudit pixel considéré ($p_c$).

**5.** Capteur suivant la revendication 4, **caractérisé en ce que** dans chaque pixel il est prévu un comparateur (10) pour comparer ledit signal représentant la luminance locale à ladite valeur de référence ($V_{ref}$, $V_{BLANC}$) et pour fournir un signal de commande, lorsque ledit signal de luminance est égal à ladite valeur de référence.

**6.** Capteur selon l'une des revendications 4 ou 5, **caractérisé en ce que** lesdits signaux représentant la luminance locale ($V_P(t)$, $V_G(t)$, $V_D(t)$, $V_H(t)$, $V_B(t)$) se présentent sous la forme de tensions.

**7.** Capteur selon les revendications 6, **caractérisé en ce que** lesdits moyens pour appliquer audit circuit de calcul (15) lesdits signaux représentant la luminance locale comprennent un jeu de capacités ($14_D$, $14_G$, $14_H$, $14_B$) pour emmagasiner les tensions ($V_G(t)$, $V_D(t)$, $V_H(t)$, $V_B(t)$) fournies par lesdits pixels immédiatement voisins pendant que ladite valeur intégrée dudit pixel considéré évolue vers la valeur de référence ($V_{ref}$).

**8.** Capteur selon l'une des revendications 4 à 7, **caractérisé en ce qu'**il comprend pour chacune desdites directions (x, y) des moyens analogiques de multiplication à quatre quadrants (18a, 18b) connectés pour multiplier les tensions emmagasinées respectivement sur lesdites capacités avec des tensions sinusoïdales et **en ce qu'**il est prévu un additionneur (22) pour sommer le résultat des multiplications effectuées par lesdits moyens de multiplication afin d'en déduire le vecteur de contraste local dudit pixel considéré.

**9.** Capteur suivant la revendication 8, **caractérisé en ce que** lesdits moyens analogiques de multiplication comportent pour chacune desdites directions (x, y) un multiplieur (18a, 18b) réalisé avec des transistors (M1 à M6), les capacités parasites des transistors (M1 à M4) prévus aux entrées desdits multiplieurs formant respectivement lesdites capacités d'emmagasinage ($14_D$, $14_G$, $14_H$, $14_B$).

**Claims**

**1.** A method for determining the local contrast at each pixel ($p_c$) of an array ($M_p$) of photosensitive pixels arranged in at least one dimension (x, y), the method consisting, during respective successive cycles of images taken, of generating a signal ($L_c$) representing the local luminance identified at each pixel, the signals representing the luminance ($L_{pn}$, $L_{p(n+1)}$, $L_{p(n-1)}$ being the integrated values of the luminance values captured by the respective pixels ($p_C$, $p_G$, $p_D$, $p_H$, $p_B$), by sampling the integrated values of the signals representing the luminances identified by the pixels ($p_G$, $p_D$, $p_H$, $p_B$) which are adjacent to the given pixel ($p_C$),
**characterised in that** the sampling takes place at a time in the said cycle at which the integrated value of the luminance identified by the said given pixel ($p_C$) becomes equal to a predetermined reference value ($V_{ref}$, $V_{BLANC}$) which is identical for all the pixels of the matrix, and for determining the local contrast of the said given pixel ($p_C$) on the basis of the values thus sampled,

- the said reference value ($V_{ref}$) is chosen as an intermediate value of the difference between a white level value (NB) and a black level value (NN) able to be identified as a maximum by the said pixels ($p_C$, $p_G$, $p_D$, $p_H$, $p_B$), this value being preferably equal to half of this difference, and

**in that** the calculation of the contrast is performed on the basis of the expression

$$C_x = L_G - L_D$$

and, in the case of a two-dimensional array, by the expression

$$C_y = L_H - L_B$$

in which:

- $C_x$ is the component of local contrast in the x direction of the matrix,
- $C_y$ is the component of local contrast in the y direction of the matrix,
- $L_G$, $L_D$ are signals representing the luminance identified respectively by the pixels ($p_G$, $p_D$), adjacent to the given pixel ($p_C$) in the x direction,
- $L_H$, $L_B$ are signals representing the luminance identified respectively by the pixels ($p_H$, $p_B$), adjacent to the given pixel ($p_C$) in the y direction,

the or each expression being used to calculate the components of the contrast vector at the said given pixel ($p_C$).

2. Method according to claim 1, **characterised in that** the integrated values of the signals representing the luminances identified by the said adjacent pixels ($p_G$, $p_D$, $p_H$, $p_B$) are accumulated in the respective capacitors (($14_D$, $14_G$, $14_H$, $14_B$) at the time when the integrated value of the given pixel ($p_C$) attains the said reference value ($V_{ref}$), the said capacitors providing the necessary values for calculation of the contrast.

3. Method according to claim 2, **characterised in that** each pair of accumulated values ($V_G(t_{ref})$, $V_D(t_{ref})$ and $V_H(t_{ref})$, $V_B(t_{ref})$) belonging to the respective said directions x and y is subjected to four-quadrant analogue multiplication by a cosinusoidal signal and, respectively, by a sinusoidal signal of the same frequency and amplitude as the said cosinusoidal signal, and **in that** the results ($I_x$ $I_y$) of the corresponding multiplications are added to form the modulus and the phase of the local contrast vector corresponding to the said given pixel ($p_C$).

4. A sensor for determining the local contrast of an observed scene by detecting the luminance emanating from the scene for initiating the method according to any one of the preceding claims, the sensor comprising

   - an array comprising at least one row of pixels arranged in at least one dimension of the said array,
   - for each pixel ($p_C$) a photosensitive circuit (ph) providing a signal representing the local luminance ($V_d$) emanating from the image and identified by the said pixel in the form of an integration value ($V_P(t)$), the sensor being **characterised in that** it comprises :
   - sampling means arranged to sample the said values at a time in a cycle at which the integrated value of the luminance identified by the said given pixel ($p_C$) becomes equal to a predetermined reference value ($V_{ref}$) which is identical for all the pixels of the matrix, and for determining the local contrast of the said given pixel ($p_C$) on the basis of the values thus sampled,
   and **in that** it also comprises:
   - a source producing the said reference value in such a way that this value is an intermediate value in the difference between a white level value (NB) and a black level value (NN) able to be identified as a maximum by the said pixels ($p_C$, $p_G$, $p_D$, $p_H$, $p_B$), this value being preferably equal to half of this difference, the said source being connected to all the pixels of the said matrix so that the same reference value may be applied to them, and means for calculating the contrast arranged to perform this calculation on the basis of the expression

$$C_x = L_G - L_D$$

and, in the case of a two-dimensional array, by the expression

$$C_y = L_H - L_B$$

in which:

   - $C_x$ is the component of local contrast in the x direction of the matrix,
   - $C_y$ is the component of local contrast in the y direction of the matrix,
   - $L_G$, $L_D$ are signals representing the luminance identified respectively by the pixels ($p_G$ $p_D$), adjacent to the given pixel ($p_C$) in the x direction,
   - $L_H$, $L_B$ are signals representing the luminance identified respectively by the pixels ($p_H$, $p_B$), adjacent to the given pixel ($p_C$) in the y direction,
   the or each expression being used to calculate the components of the contrast vector at the said given pixel ($p_C$).

5. Sensor according to claim 4, **characterised in that** a comparator (10) is provided in each pixel to compare the said signal representing the local luminance to the said reference value ($V_{ref}$, $V_{BLANC}$) and to provide a control signal, when the said luminance signal is equal to the said reference value.

6. Sensor according to claims 4 or 5, **characterised in that** the said signals representing the local luminance ($V_P(t)$, $V_G(t)$, $V_D(t)$, $V_H(t)$, $V_B(t)$) are in the form of voltages.

7. Sensor according to claim 6, **characterised in that** the said means for applying the said signals representing local luminance to the calculation circuit (15) comprise a set of capacitors ($14_D$, $14_G$, $14_H$, $14_H$) for storing the voltages ($V_G(t)$, $V_D(t)$, $V_H(t)$, $V_B(t)$) provided by the immediately adjacent pixels while the said integrated value of the said given pixel evolves towards the reference value ($V_{ref}$).

8. Sensor according to one of claims 4 to 7, **characterised in that** it comprises for each of the said directions (x, y) four-quadrant analogue multiplication means (18a, 18b) connected for multiplying the respective stored voltages of the said capacitors with the sinusoidal voltages, and **in that** it is provided with an adder (22) to sum the result of the multiplications performed by the said multiplication means in order to deduce the local contrast vector of the said given pixel.

9. Sensor according to claim 8, **characterised in that** the said analogue multiplication means comprises for each of the said directions (x, y) a multiplier (18a, 18b) achieved with transistors (M1 to M6), the parasitic capacitance of the transistors (M1 to M4) provided at the inputs of the said multipliers forming the respective storage capacitors ($14_D$, $14_G$, $14_H$, $14_B$).

**Patentansprüche**

1. Verfahren zur Bestimmung des lokalen Kontrastes an jedem Pixel ($p_c$) eines Netzes (Mp) von lichtempfindlichen Pixeln, die mindestens entlang einer Dimension (x, y) angeordnet sind, wobei dieses Verfahren darin besteht, im Laufe jeweiliger aufeinanderfolgender Bildaufnahmezyklen ein Signal ($L_c$) zu erzeugen, das die lokale Helligkeit darstellt, die von jedem Pixel gemessen wird, wobei die Signale ($L_{pn}$, $L_{p(n+1)}$, $L_{p(n-1)}$), die die Helligkeit darstellen, integrierte Werte der von den jeweiligen Pixeln ($p_c$, $p_G$, $p_D$, $p_H$, $p_B$) gemessenen Helligkeitswerte sind, und die integrierten Werte der Signale abzutasten, die die von den zu einem betreffenden Pixel ($p_c$) benachbarten Pixeln ($p_G$, $p_D$, $p_H$, $p_B$) gemessenen Helligkeiten darstellen,
   **dadurch gekennzeichnet, dass** die Abtastung an einem Zeitpunkt in diesem Zyklus erfolgt, an dem der integrierte Wert der von diesem betreffenden Pixel ($p_c$) gemessenen Helligkeit einen vorbestimmten Bezugswert ($V_{ref}$, $V_{BLANC}$) erreicht, der für alle Pixel der Matrix gleich ist, und dass der lokale Kontrast des betreffenden Pixels ($p_c$) auf der Basis der derart abgetasteten Werte bestimmt wird,

   - wobei als dieser Bezugswert ($V_{ref}$) ein Zwischenwert der Differenz gewählt wird, die einen Weißpegelwert (NB) von einem Schwarzpegelwert (NN) trennt, die maximal von diesen Pixeln ($p_c$, $p_G$, $p_D$, $p_H$, $p_B$) gemessen werden können, wobei dieser Wert bevorzugt der Hälfte dieser Differenz entspricht, und

   **dadurch**, dass die Kontrastberechnung auf der Basis des Ausdrucks

$$C_x = L_G - L_D$$

   und, im Falle eines zweidimensionalen Netzes, des Ausdrucks

$$C_y = L_H - L_B$$

   erfolgt, wobei:

   - $C_x$ lokale Kontrastkomponente in der X-Richtung der Matrix
   - $C_y$ lokale Kontrastkomponente in der Y-Richtung der Matrix
   - $L_G$, $L_D$ Signale, die die Helligkeiten darstellen, die jeweils von den Pixeln ($p_G$, $p_D$) gemessen werden, die zum betreffenden Pixel ($p_c$) in der X-Richtung benachbart sind,

- $L_H$, $L_B$ Signale, die die Helligkeiten darstellen, die jeweils von den Pixeln ($p_H$, $p_B$) gemessen werden, die zum betreffenden Pixel ($p_c$) in der Y-Richtung benachbart sind,

wobei der Ausdruck oder die Ausdrücke benutzt werden, um die Komponenten des Kontrastvektors am betreffenden Pixel ($p_c$) zu berechnen.

2. Verfahren nach Anspruch 1, **dadurch gekennzeichnet, dass** die integrierten Werte der Signale, die die Helligkeiten darstellen, die von den benachbarten Pixeln ($p_G$, $P_D$, $P_H$, $P_B$,) gemessen werden, in jeweiligen Kapazitäten (($14_D$, $14_G$, $14_H$, $14_B$) aufsummiert werden, wenn der integrierte Wert des betreffenden Pixels ($p_c$) den Bezugswert ($V_{ref}$) erreicht, wobei diese Kapazitäten die zur Kontrastberechnung benötigten Werte ausgeben.

3. Verfahren nach Anspruch 2, **dadurch gekennzeichnet, dass** jede aufsummierte Wertepaar ($V_G(t_{ref})$, $V_D(t_{ref})$ und $V_H(t_{ref})$, $V_B(t_{ref})$), das jeweils den X- und Y-Richtungen angehört, einer Analogmultiplikation mit vier Quadranten durch ein kosinusförmiges Signal und jeweils ein sinusförmiges Signal gleicher Frequenz und Amplitude wie dieses kosinusförmige Signal unterzogen wird, und **dadurch**, dass die Ergebnisse ($I_x$, $I_y$) der entsprechenden Multiplikationen addiert werden, um das Modul und die Phase des lokalen Kontrastvektors zu formen, das dem betreffenden Pixel ($p_c$) entspricht.

4. Sensor, der dazu bestimmt ist, den lokalen Kontrast einer beobachteten Szene zur Durchführung des Verfahrens nach einem der vorherigen Ansprüche durch Erkennung der von dieser Szene ausgehenden Helligkeit zu bestimmen, wobei dieser Sensor umfasst

- ein Netz, umfassend mindestens eine Pixelreihe, die entlang mindestens einer Dimension des Netzes angeordnet sind,
- eine lichtempfindliche Schaltung (ph) in jedem Pixel ($p_c$), die ein Signal ausgibt, das die lokale Helligkeit ($V_{cl}$) darstellt, die vom Bild ausgeht und von diesem Pixel in Form eines Integrationswerts ($V_p(t)$) gemessen wird, wobei dieser Sensor **dadurch gekennzeichnet ist, dass** er umfasst:
- Abtastmittel, die angeordnet sind, um die Abtastung dieser Werte an einem Zeitpunkt im Zyklus durchzuführen, an dem der integrierte Wert der vom betreffenden Pixel ($p_c$) gemessenen Helligkeit einen vorbestimmten Bezugswert ($V_{ref}$) erreicht, der für alle Pixel der Matrix gleich ist, und um den lokalen Kontrast des betreffenden Pixels ($p_c$) auf der Basis der derart abgetasteten Werte zu bestimmen, und **dadurch**, dass es außerdem umfasst:
- eine Quelle, die diesen Bezugswert derart erzeugt, das dieser Wert ein Zwischenwert der Differenz ist, die einen Weißpegelwert (NB) von einem Schwarzpegelwert (NN) trennt, die maximal von diesen Pixeln ($p_c$, $p_G$, $p_D$, $p_H$, $p_B$,) gemessen werden können, wobei dieser Wert bevorzugt der Hälfte dieser Differenz entspricht, wobei diese Quelle mit allen Pixeln dieser Matrix verbunden ist, um den gleichen Bezugswert an diese anzulegen, und Kontrastberechnungsmittel, die angeordnet sind, um diese Berechnung durchzuführen auf der Basis des Ausdrucks

$$C_x = L_G - L_D$$

und, bei einem zweidimensionalen Netz, des Ausdrucks

$$C_y = L_H - L_B$$

wobei:

- $C_x$ lokale Kontrastkomponente in der X-Richtung der Matrix
- $C_y$ lokale Kontrastkomponente in der Y-Richtung der Matrix
- $L_G$, $L_D$ Signale, die die Helligkeiten darstellen, die jeweils von den Pixeln ($p_G$, $p_D$) gemessen werden, die zum betreffenden Pixel ($p_c$) in der X-Richtung benachbart sind,
- $L_H$, $L_B$ Signale, die die Helligkeiten darstellen, die jeweils von den Pixeln ($p_H$, $p_B$) gemessen werden, die zum betreffenden Pixel ($p_c$) in der Y-Richtung benachbart sind,

wobei der Ausdruck oder die Ausdrücke benutzt werden, um die Komponenten des Kontrastvektors am betreffenden Pixel ($p_c$) zu berechnen.

5. Sensor nach Anspruch 4, **dadurch gekennzeichnet, dass** in jedem Pixel ein Komparator (10) vorgesehen ist, um das Signal, das die lokale Helligkeit darstellt, mit dem Bezugswert ($V_{ref}$, $V_{blanc}$) zu vergleichen und um ein Steuersignal auszugeben, wenn dieses Helligkeitssignal dem Bezugswert entspricht.

6. Sensor nach einem der Ansprüche 4 oder 5, **dadurch gekennzeichnet, dass** die Signale, die die lokale Helligkeit darstellen ($V_p(t)$, $V_G(t)$, $V_D(t_{ref})$, $V_H(t)$, $V_B(t)$) in Form von Spannungen vorliegen.

7. Sensor nach Anspruch 6, **dadurch gekennzeichnet, dass** die Mittel, um die Signale, die die lokale Helligkeit darstellen, an die Rechenschaltung (15) anzulegen, einen Satz Kapazitäten ($14_D$, $14_G$, $14_H$, $14_B$) umfassen, um die Spannungen ($V_G(t)$, $V_D(t_{ref})$, $V_H(t)$, $V_B(t)$ zu speichern, die von den unmittelbar benachbarten Pixeln abgegeben werden, während der integrierte Wert des betreffenden Pixels ($p_c$) sich dem Bezugswert ($V_{ref}$) nähert.

8. Sensor nach einem der Ansprüche 4 bis 7, **dadurch gekennzeichnet, dass** er für jede der Richtungen (x, y) analoge Multiplikationsmittel mit vier Quadranten (18a, 18b) umfasst, die verbunden sind, um die Spannungen, die jeweils in diesen Kapazitäten gespeichert sind, mit sinusförmigen Spannungen zu multiplizieren, und **dadurch**, dass er mit einem Addierer (22) versehen ist, um das Ergebnis der von diesen Multiplikationsmitteln durchgeführten Multiplikationen zu addieren, um daraus den lokalen Kontrastvektor des betreffenden Pixels abzuleiten.

9. Sensor nach Anspruch 8, **dadurch gekennzeichnet, dass** diese analogen Multiplikationsmittel für jede der Richtungen (x, y) einen Multiplikator (18a, 18b) umfassen, der mit Transistoren (M1 bis M6) realisiert ist, wobei die Streukapazitäten der an den Eingängen dieser Multiplikatoren vorgesehenen Transistoren (M1 bis M6) jeweils diese Speicherkapazitäten ($14_D$, $14_G$, $14_H$, $14_B$) formen.

Fig. 1

Fig. 2

$p_C$  $p_H$  $M_P$

$L_H$

$L_G$  $L_C$  $L_D$  $p_D$

$p_G$

$L_B$

Y

X

$p_B$

Fig. 3

$M_P$

$ci$  $ci$  $p_C$  $ph$  $p_H$

$ph$

$cc$

$ci$

$ci$  $ph$

$cc$  $p_D$

$p_G$

$ci$  $ci$

$ci$  $ci$

$ph$

Y

$cc$

X

$cc$  $cc$  $p_B$  $ci$

Fig. 4

*Fig. 5*

Fig. 6

Fig. 7

Fig. 8

## RÉFÉRENCES CITÉES DANS LA DESCRIPTION

**Documents brevets cités dans la description**

- FR 2605475
- WO 9814002 A
- US 5837993 A
- EP 1150250 A

**Littérature non-brevet citée dans la description**

- **S.Kavidias et al.** *IEEE, Journal of Solid State Circuits,* Août 2000, vol. 35
- **Y. Ni et al.** *IEEE, Journal of Solid State Circuits,* Juillet 1997, vol. 32